# EUROPÄISCHE PATENTANMELDUNG

(11) **EP 0 829 879 A1**
(43) Veröffentlichungstag der Anmeldung: **18.03.1998**
(21) Anmeldenummer: 97112729.5
(22) Anmeldetag: 24.07.1997
(51) Int. Cl.: G11B 33/04

(54) **Aufnahmevorrichtung für Compact-Disc (CD), Musikkassetten oder dergleichen**

(30) Priorität: 27.08.1996 DE 19634630
(71) Anmelder: boeder Deutschland GmbH, 65439 Flörsheim/Main (DE)
(72) Erfinder: Kempfer, Sebastian, 65760 Eschborn (DE)
(74) Vertreter: Preissner, Nicolaus, Dipl.-Ing.

(57) **Zusammenfassung**

Die Erfindung betrifft eine Aufnahmevorrichtung 10 für Compact-Discs (CD), Musikkassetten oder dergleichen 13a, 13b. Hierzu sind an der Aufnahmevorrichtung 10 eine Vielzahl von beabstandeten Einschüben 12a, 12b zur Aufnahme jeweils einer CD 13a, 13b vorgesehen. Die Aufnahmevorrichtung 10 ist mit Führungsschienen 14a, 14b zur gleitbeweglichen Aufnahme mindestens eines Verbindungselements 15a, 15b versehen. Das Verbindungselement weist jeweils mindestens zwei Längsnuten 22a, 22b zur Verbindung von zwei Aufnahmevorrichtungen 10 auf. Hierdurch wird ein besonders einfacher Verbindungsmechanismus zur Verbindung derartiger Aufnahmevorrichtungen 10 geschaffen.

## Beschreibung

Die Erfindung betrifft eine Aufnahmevorrichtung für Compact-Discs, Musikkassetten oder dergleichen mit einer Bedienseite, die eine Vielzahl von beabstandeten Einschüben für jeweils eine Compact Disc aufweist.

Derartige Aufnahmeeinrichtungen sind bekannt. Sie dienen der geordneten Aufnahme von Compact-Discs (CD), CD-Roms, Musikkassetten oder dergleichen. Demgemäß soll im Zusammenhang mit der vorliegenden Erfindung der Begriff 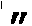 CD" als Oberbegriff für derartige Informationsträger verwendet werden. Bei den bekannten Aufnahmeeinrichtungen sind eine Vielzahl von Einschüben für jeweils eine CD vorgesehen, die durch beabstandete Trennböden begrenzt sind. Es ist weiterhin bekannt, mehrere derartige Aufnahmeeinrichtungen durch geeignete Verbindungssysteme zu größeren Anordnungen auszubauen. Hierdurch können dann sogenannte CD-Türme errichtet werden. Als Verbindungssysteme sind Klips- und Steckverbindungen bekannt. Diese Verbindungssysteme weisen den Nachteil auf, daß sie eine Vielzahl von Einzelteilen besitzen und die Handhabung kompliziert ist.

Ausgehend von dem vorstehend benannten Stand der Technik liegt der Erfindung die Aufgabe zugrunde, eine Aufnahmeeinrichtung der eingangs genannten Art zu schaffen, die sich durch einen einfachen Verbindungsmechanismus auszeichnet.

Zur Lösung dieser Aufgabe wird bei einer Aufnahmevorrichtung der eingangs genannten Art vorgeschlagen, daß die Aufnahmevorrichtung mindestens eine Führungsschiene zur gleitbeweglichen Aufnahme mindestens eines Verbindungselements aufweist, an dem jeweils mindestens zwei Längsnuten zur Verbindung von zwei Aufnahmevorrichtungen vorgesehen sind.

Bei der erfindungsgemäßen Aufnahmevorrichtung gestattet das gleitbeweglich auf der Führungsschiene angeordnete Verbindungselement die Kopplung mit einer weiteren Aufnahmevorrichtung. Hierbei werden die am Verbindungselement vorgesehenen Längsnuten in die Führungsschienen der jeweiligen Aufnahmeeinrichtungen eingeführt. Mit den Verbindungselementen können eine Vielzahl von Aufnahmevorrichtungen miteinander gekoppelt werden. Auch wenn lediglich eine einzige Aufnahmevorrichtung zum Einsatz kommt, können die Verbindungselemente als Abstützung an der Aufnahmevorrichtung verbleiben. Die erfindungsgemäße Aufnahmevorrichtung zeichnet sich durch einen besonders einfachen Verbindungsmechanismus aus, der bei hoher Variabilität einen besonders einfachen Aufbau besitzt.

Vorteilhafte Ausgestaltungen der Erfindung sind in den Unteransprüchen aufgeführt.

Vorteilhaft ist die Aufnahmevorrichtung pultförmig mit einer schrägen oder gebogenen Bedienseite ausgebildet, in der die Einschübe vorgesehen sind. In die Einschübe kann jeweils eine CD in senkrechter Anordnung eingeführt werden. Eine derartige Aufnahmevorrichtung zeichnet sich durch eine gute Bedienbarkeit aus, da die CD einfach einzuführen und zu entnehmen ist. Die Längskanten der Bedienseite sind vorteilhaft als Führungsschienen ausgebildet, auf die die Verbindungselemente aufschiebbar sind.

Vorteilhaft weist die Aufnahmevorrichtung eine rechteckförmige Grundfläche und einen dreieckförmigen Querschnitt auf.

In weiterer Ausgestaltung wird vorgeschlagen, daß die Verbindungselemente am Umfang versetzt angeordnete Längsnuten zur formschlüssigen Aufnahme jeweils einer Führungsschiene der Aufnahmevorrichtung aufweisen. Mit derartigen Verbindungselementen können beispielsweise zwei Aufnahmevorrichtungen nebeneinanderliegend miteinander verbunden werden, indem das Verbindungselement zwischen den beiden Aufnahmevorrichtungen angeordnet wird. Alternativ ist es jedoch auch möglich, zwei Aufnahmevorrichtungen winkelförmig über die versetzt am Verbindungselement angeordneten Längsnuten miteinander zu verbinden.

Vorteilhaft weisen die Verbindungselemente einen kreisförmigen oder vieleckförmigen Querschnitt auf. Hierbei können die Verbindungselemente zylinderförmig ausgebildet sein.

Weiterhin betrifft die Erfindung eine Anordnung mit mindestens zwei Aufnahmevorrichtungen nach einem der vorstehend genannten Ansprüche, die dadurch gekennzeichnet ist, daß die Aufnahmevorrichtungen durch Verbindungselemente miteinander verbunden sind, deren Längsnuten an den Führungsschienen der Aufnahmevorrichtung aufgenommen sind.

In weiterer Ausgestaltung wird vorgeschlagen, daß die Bedienseiten der Aufnahmeeinrichtungen einen Winkel begrenzen und daß die Aufnahmevorrichtungen an einer Längskante mittels mindestens einem Verbindungselement miteinander verbunden sind. Bei dieser vorteilhaften Ausführungsform der Erfindung werden die Einschübe für jeweils eine CD durch zwei benachbart angeordnete Aufnahmevorrichtungen gebildet.

Zur Erhöhung der Stabilität der mit Winkel zueinander angeordneten Aufnahmeeinrichtung wird vorgeschlagen, daß die äußeren Längskanten benachbarter Aufnahmevorrichtungen über Verbindungsstreben verbunden sind, die endseitig Befestigungselemente zur formschlüssigen Aufnahme der an den Längskanten vorgesehenen Führungsschienen aufweisen. Zweckmäßig sind die Verbindungsstreben jeweils im Endbereich der Aufnahmevorrichtungen angeordnet.

Vorteilhaft sind die Befestigungselemente kugelförmig ausgebildet.

Nachfolgend wird die Erfindung anhand von Ausführungsbeispielen näher erläutert, die in schematischer Weise in der Zeichnung dargestellt sind. Hierin zeigen:
- Figur 1: eine perspektivische Ansicht auf eine Ausführungsform der erfindungsgemäßen Aufnahmevorrichtung;
- Figur 2: einen Schnitt längs der Linie II-II in Figur 1;
- Figur 3: eine Draufsicht auf das Verbindungselement der Aufnahmevorrichtung gemäß Figur 1;
- Figur 4: einen Schnitt längs der Linie IV-IV gemäß Figur 3;
- Figur 5: eine Draufsicht auf eine Verbindungsstrebe zur Verbindung zweier Aufnahmevorrichtungen; und
- Figur 6: eine Ausführungsvariante mit zwei Aufnahmevorrichtungen gemäß Figur 1.

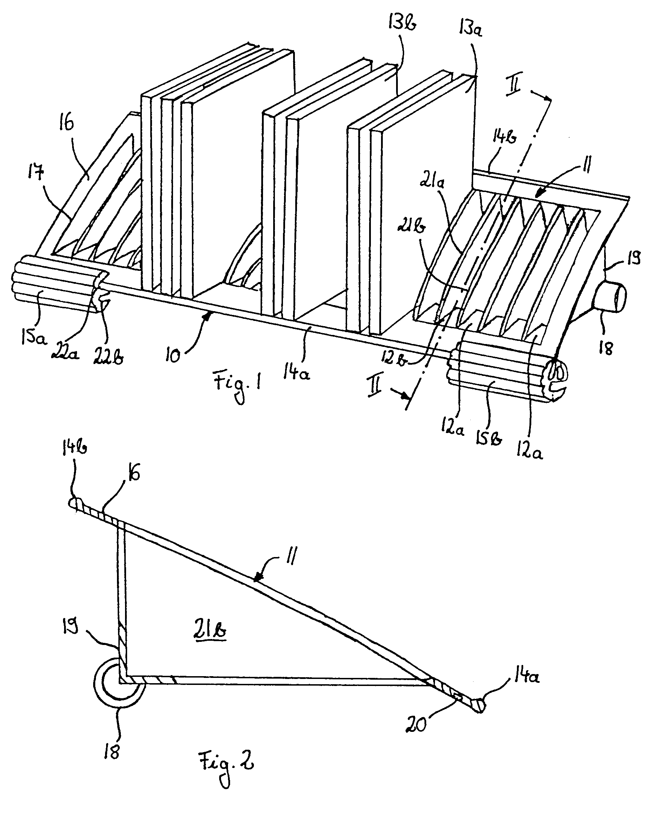

Figur 1 zeigt in perspektivischer Ansicht eine Aufnahmevorrichtung 10 zur Aufnahme einer Vielzahl von Compact-Discs (CD) 13a, 13b. Die Aufnahmevorrichtung 10 ist als Spritzgußteil aus einem geeigneten-Kunststoff hergestellt. Wie aus Figur 1 hervorgeht, ist die Aufnahmevorrichtung 10 pultförmig ausgebildet und weist eine schräg verlaufende Bedienseite 11 mit einer Vielzahl von Einschüben 12a, 12b für jeweils eine CD 13a, 13b auf. Die Bedienseite 11 wird durch einen rechteckförmigen Rahmen 16 begrenzt, in dem eine ebenfalls rechteckförmige Aussparung 17 vorgesehen ist. In der Aussparung 17 sind die beabstandeten Trennböden 21a, 21b zur Bildung der Einschübe 12a, 12b angeordnet.

Gemäß Figur 2 weist der Rahmen 16 eine leichte Biegung auf. Die Trennböden 21a, 21b werden an einem Winkelträger 19 aufgenommen, der sich im wesentlichen über die gesamte Breite der Aufnahmevorrichtung erstreckt. Endseitig ist der Winkelträger 19 mit Stützrohren 18 versehen.

Im Bereich seiner Außenkanten ist der Rahmen 16 mit integrierten Führungsschienen 14a, 14b versehen. Die Führungsschienen 14a, 14b sind jeweils mit einem nährungsweise halbkreisförmigen Querschnitt ausgebildet. Die Führungsschienen 14a, 14b dienen der Aufnahme von Verbindungselementen 15a, 15b. Bei dem Ausführungsbeispiel gemäß Figur 1 sind lediglich an der Führungsschiene 14a die beiden Verbindungselemente 15a, 15b aufgebracht.

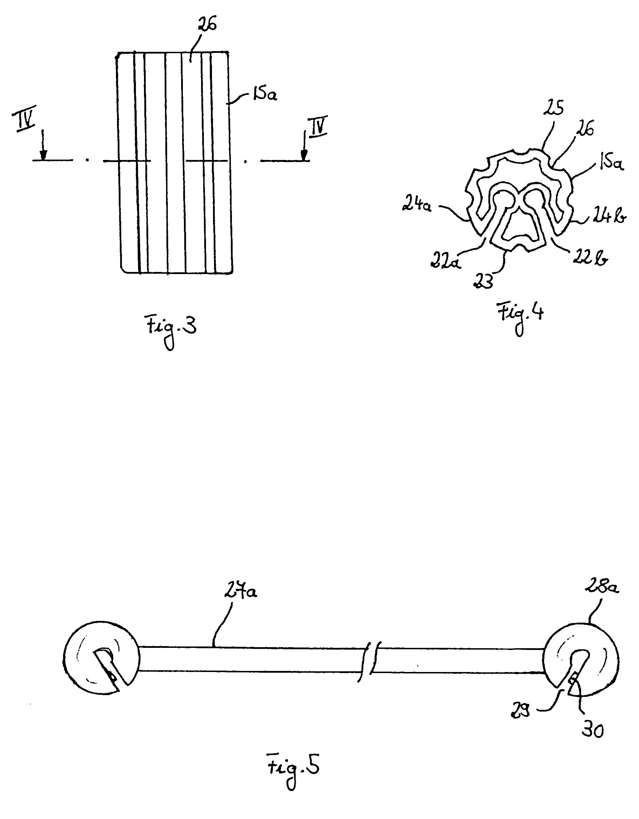

Die nähere Ausgestaltung der Verbindungselemente 15a, 15b soll anhand der Figuren 3 und 4 erläutert werden.

Figur 3 zeigt eine Draufsicht auf das Verbindungselement 15a, das identisch zu dem Verbindungselement 15b ausgebildet ist. Das Verbindungselement 15a weist Zylinderform auf, wobei ein vieleckförmiger Querschnitt vorgesehen ist. Das als Kunststoffspritzteil hergestellte Verbindungselement 15a weist zwei am Umfang versetzt angeordnete Längsnuten 22a, 22b auf. Die mit Winkel zueinander angeordneten Längsnuten 22a, 22b dienen der formschlüssigen Aufnahme der Führungsschienen 14a, 14b der Aufnahmevorrichtung 10. Demgemäß ist der Querschnitt der Längsnuten 22a, 22b entsprechend der Führungsschienen 14a, 14b ausgebildet. Die Längsnuten 22a, 22b werden von einem Zwischenteil 23 und mit Abstand hierzu angeordneten Klemmteilen 24a, 24b begrenzt. Durch diese Anordnung wird eine gute Klemmwirkung an den Führungsschienen 14a, 14b der Aufnahmevorrichtung 10 erzielt.

Die Verbindungselemente können zur Verbindung von zwei nebeneinander angeordneten Aufnahmevorrichtungen 10 eingesetzt werden, wobei ein Verbindungselement 15a, 15b zwischen die beiden Aufnahmevorrichtungen 10 verschoben wird. Somit wird in einer Längsnut 22a die Führungsschienen 14a der benachbarten Aufnahmevorrichtungen 10 aufgenommen. Alternativ können derartige Verbindungselemente 15a, 15b auch zur Festlegung von mit Winkel zueinander angeordneten Aufnahmevorrichtungen 10 Verwendung finden, was im Zusammenhang mit Figur 6 näher erläutert wird.

Die Verbindungselemente 15a, 15b sind mit einer Außenseite 25 ausgebildet, die mit in Längsrichtung verlaufenden Sicken 26 versehen ist. Durch diese strukturierte Außenseite 25 gewährleisten die Verbindungselemente 15a, 15b bei der Anordnung gemäß Figur 1 eine gute Standsicherheit.

Figur 6 zeigt ein Ausführungsbeispiel, bei der zwei Aufnahmevorrichtungen 10 jeweils senkrecht und mit Winkel zueinander angeordnet sind. Zur Beschreibung der Ausführungsvariante gemäß Figur 6 sollen die bereits eingeführten Bezugszeichen für gleiche oder funktionsgleiche Teile Verwendung finden.

Die bei den Aufnahmevorrichtungen 10 werden durch zwei Verbindungselemente 15a, 15b miteinander verbunden, wobei in Figur 6 lediglich das obenliegend angeordnete Verbindungselement 15a sichtbar ist. Hierbei werden die Führungsschienen 14a, 14b der benachbarten Aufnahmevorrichtungen 10 jeweils in den beiden Längsnuten 22a, 22b der Verbindungselemente 15a, 15b aufgenommen. Um die Winkelform der beiden Aufnahmevorrichtungen 10 zu stabilisieren sind weiterhin endseitig zwei Verbindungsstreben 27a, 27b vorgesehen. Die Verbindungsstreben 27a, 27b weisen jeweils kugelförmige Befestigungselemente 28a, 28b auf. Die Befestigungselemente 28a, 28b werden an den Führungsschienen 14a, der Aufnahmevorrichtungen 10 festgelegt.

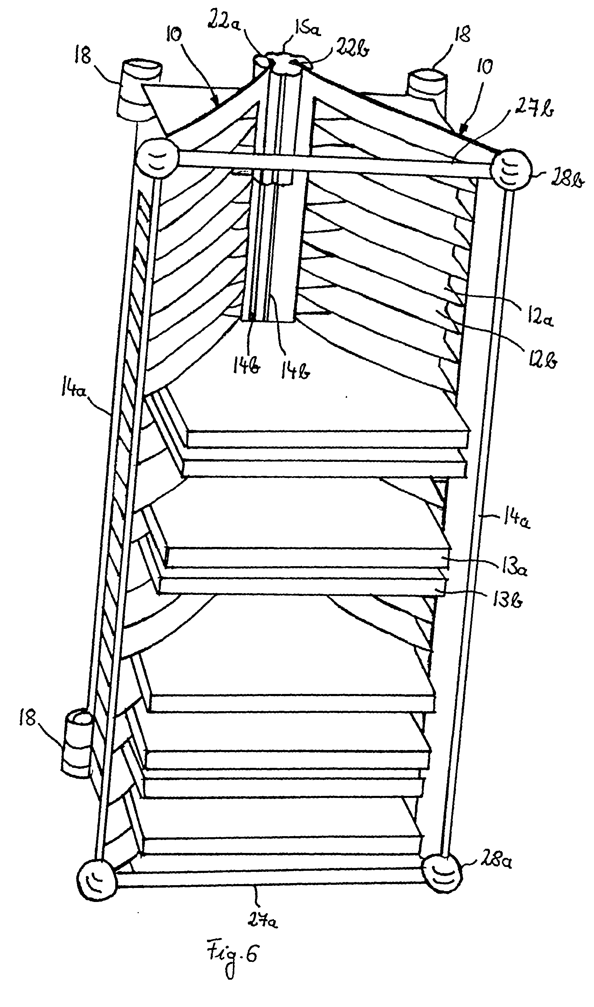

Die nähere Ausgestaltung der Verbindungsstreben 27a, 27b geht aus Figur 5 hervor, die eine Draufsicht auf die Verbindungsstrebe 27a zeigt. Wie aus dieser Darstellung ersichtlich ist, weist das kugelförmige Befestigungselement 28a eine Aussparung 29 auf, die zur formschlüssigen Aufnahme der Führungsschiene 14a der Aufnahmevorrichtung 10 ausgebildet ist. In die Aussparung 29 ragt eine Nocke 30 ein, die in eine korrespondierende Befestigungsnut 20 an dem Rahmen 16 der Aufnahmevorrichtung 10 eingreift. Die Festlegung der Verbindungsstrebe 27a an den Aufnahmevorrichtungen erfolgt derart, daß die Gesamtanordnung eine leichte Neigung nach hinten aufweist. Hierdurch wird ein unerwünschtes Herausrutschen der CD 13a, 13b aus den Einschüben 12a, 12b verhindert.

Bei der Ausführungsvariante gemäß Figur 6 werden die Einschübe 12a, 12b für die CD 13a, 13b durch die benachbarten Aufnahmevorrichtungen 10 gebildet. Hierdurch werden die eingeführten CD lediglich an benachbarten Eckbereichen gehalten, was jedoch in der Praxis ausreichend ist. Diese Ausgestaltung der Einschübe 12a, 12b erleichtert die Entnahme der CD 13a, 13b.

Der mit dem Aufnahmevorichtungen 10 gebildete CD-Turm ist besonders standsicher, wobei die bodenseitige Abstützung einerseits über die Stützrohre 18 und andererseits über die benachbarten Befestigungselemente 28a der Verbindungsstrebe 27a erfolgt.

Bei weiteren nicht dargestellten Ausführungsvarianten können mittels einer Vielzahl von Aufnahmevorrichtungen 10 auch größere Anordnungen beliebiger Konfiguration erstellt werden.

## Patentansprüche

1. Aufnahmevorrichtung (10) für Compact-Discs (13a, 13b), Musikkassetten oder dergleichen mit einer Bedienseite (11), die eine Vielzahl von beabstandeten Einschüben (12a, 12b) für jeweils eine Compact Disc (13a, 13b) aufweist, dadurch gekennzeichnet, daß die Aufnahmevorrichtung (10) mindestens eine Führungsschiene (14a, 14b) zur gleitbeweglichen Aufnahme mindestens eines Verbindungselements (15a, 15b) aufweist, an dem jeweils mindestens zwei Längsnuten (22a, 22b) zur Verbindung von zwei Aufnahmevorrichtungen (10) vorgesehen sind.

2. Aufnahmevorrichtung nach Anspruch 1, dadurch gekennzeichnet, daß die Aufnahmevorrichtung (10) pultförmig mit einer schrägen oder gebogenen Bedienseite (11) ausgebildet ist, in der die Einschübe (12a, 12b) vorgesehen sind.

3. Aufnahmevorrichtung nach Anspruch 1 oder 2, dadurch gekennzeichnet, daß die Aufnahmevorrichtung (10) eine rechteckförmige Grundfläche und einen dreieckförmigen Querschnitt aufweist.

4. Aufnahmevorrichtung nach einem der Ansprüche 1 bis 3, dadurch gekennzeichnet, daß die Verbindungselemente (15a, 15b) am Umfang versetzt angeordnete Längsnuten (22a, 22b) zur formschlüssigen Aufnahme jeweils einer Führungsschiene (14a, 14b) der Aufnahmevorrichtung (10) aufweisen.

5. Aufnahmevorrichtung nach einem der Ansprüche 1 bis 4, dadurch gekennzeichnet, daß die Verbindungselemente (15a, 15b) einen kreisförmigen oder vieleckförmigen Querschnitt aufweisen.

6. Aufnahmevorrichtung nach einem der Ansprüche 1 bis 5, dadurch gekennzeichnet, daß die Verbindungselemente (15a, 15b) zylinderförmig ausgebildet sind.

7. Anordnung mit mindestens zwei Aufnahmevorrichtungen (10) nach einem der Ansprüche 1 bis 6, dadurch gekennzeichnet, daß die Aufnahmevorrichtungen (10) durch Verbindungselemente (15a, 15b) miteinander verbunden sind, deren Längsnuten (22a, 22b) an den Führungsschienen (14a, 14b) der Aufnahmevorrichtungen (10) aufgenommen sind.

8. Anordnung nach Anspruch 7, dadurch gekennzeichnet, daß mindestens zwei Aufnahmevorrichtungen (10) vorgesehen sind, daß die Bedienseiten (11) der Aufnahmevorrichtungen (10) einen Winkel begrenzen und daß die Aufnahmevorrichtungen (10) an einer Längskante mittels mindestens einem Verbindungselement (15a, 15b) miteinander verbunden sind.

9. Anordnung nach Anspruch 8, dadurch gekennzeichnet, daß die äußeren Längskanten der benachbarten Aufnahmevorrichtungen (10) über Verbindungsstreben (27a, 27b) verbunden sind, die endseitig Befestigungselemente (28a, 28b) zur formschlüssigen Aufnahme der an den Längskanten der Aufnahmevorrichtung (10) vorgesehenen Führungsschienen (14a, 14b) aufweisen.

10. Anordnung nach Anspruch 9, dadurch gekennzeichnet, daß die Befestigungselemente (28a, 28b) kugelförmig ausgebildet sind.
